# FASCICULE DE BREVET EUROPEEN

(11) **EP 1 501 319 B1**
(45) Date de publication et mention de la délivrance du brevet: **23.01.2008**
(21) Numéro de dépôt: 03291835.1
(22) Date de dépôt: 24.07.2003
(51) Int. Cl.: H04Q 7/22

(54) **Procédé et système de messages déposés dans une boîte de reception d'un service de messagerie**
Verfahren und Vorrichtung zum Bereitstellen von Nachrichten in den Posteingangsdienst einer Dienstnachricht
Method and system for placing messages in the inbox of a message service

(43) Date de publication de la demande: 26.01.2005
(73) Titulaire: FRANCE TELECOM, 75015 Paris (FR)
(72) Inventeur: Darsin, Bruno, 78220 Viroflay (FR); Rouge, Thierry, 22560 Pleumeur Bodou (FR); Brun, Arnaud, 92100 Boulogne Billancourt (FR)
(74) Mandataire: Fréchède, Michel

(56) Documents cités:
- WO-A-00/59196
- WO-A-02/052881
- "3rd Generation Partnership Project; Technical Specification Group Terminals; Multimedia Messaging Service (MMS); Functional description; Stage 2 (Release 5)" 3GPP TS 23 140 V5.7.0, [en ligne] juin 2003 (2003-06), pages 1-157, XP002266352 Extrait de l'Internet: <URL:http://www.3gpp.org/ftp/Specs/archive /23_series/23.140/23140-570.zip> [extrait le 2003-12-11]

## Description

La présente invention concerne un procédé de soumission à un terminal de télécommunication d'un message déposé dans une boîte de réception d'un service de messagerie et un système de soumission associé à ce procédé.

Dans le domaine des télécommunications, les services de messagerie sont très répandus.

En particulier, le service de messagerie multimédia permet d'envoyer et de recevoir des messages de grandes tailles contenant des images, du son, du texte ou de la vidéo. Ce service de messagerie multimédia est assuré par un serveur de messagerie multimédia qui permet l'envoi et la réception de messages multimédias depuis tous dispositifs comportant un moyen de communication avec ce serveur de messagerie multimédia et un moyen de composition et de lecture des messages multimédias, usuellement appelé client MMS. Ce service peut être déployé sur un réseau mobile, par exemple GSM, GPRS ou UMTS, ou sur un réseau fixe filaire ou non.

Par ailleurs, beaucoup d'opérateurs mobiles ou fixes proposent à leurs abonnés un service de répertoire. Ce service est un service complémentaire des services de messagerie qui permet le plus souvent aux utilisateurs l'enregistrement d'un carnet d'adresses comprenant plusieurs informations (nom, photo, adresse, numéro de téléphone, etc...) par correspondant.

La plupart des opérateurs offrent à leurs abonnés un service de messagerie vocale. Lorsqu'un utilisateur disposant de ce service n'est pas joignable par exemple si son terminal est éteint ou hors couverture réseau, si sa ligne est occupée ou renvoyée de manière inconditionnelle sur la messagerie vocale ou si l'utilisateur refuse de prendre l'appel, le correspondant déposant a la possibilité d'enregistrer un message vocal dans une boîte de réception vocale de l'abonné. Ensuite, ce service de messagerie notifie à l'utilisateur l'existence d'un nouveau message dans sa boîte vocale.

La notification de la réception d'un nouveau message peut se présenter sous différentes formes, notamment sous forme textuelle ou vocale.

Lorsque la notification est textuelle, elle peut se faire par envoi d'un message SMS, ou d'un message électronique e-mail. Les messages SMS sont reçus sur le mobile ou le poste fixe de l'utilisateur. Les messages envoyés par e-mail peuvent être consultés depuis un ordinateur ou un assistant numérique personnel (PDA) via un site internet, ou encore depuis un terminal mobile utilisé en mode WAP.

L'existence d'un nouveau message dans une boîte de réception peut également être notifiée par appel téléphonique ou par envoi d'une notification vocale vers un poste fixe. Dans ce dernier cas, l'abonné entend une tonalité spécifique lorsqu'il décroche son téléphone ou voit sur celui-ci une information visuelle qui lui indique l'existence d'un nouveau message dans la boîte de réception vocale. Les messages déposés peuvent être consultés soit, directement depuis le téléphone abonné à la boîte vocale ou, soit indirectement depuis un téléphone quelconque.

Cependant, aucun mode de notification existant ne permet d'inclure le message vocal directement dans la notification à destination du terminal destinataire. En effet, les différents moyens de notification existants permettent uniquement la notification de l'existence d'un message et non l'écoute ou la lecture du message. En conséquence, après avoir reçu le message de notification indiquant l'existence d'un nouveau message dans sa boîte vocale, l'utilisateur abonné doit ensuite appeler sa messagerie vocale pour pouvoir écouter son message.

Le plus proche document de l'état de l'art est la spécification 3GPP TS 23140 v5.7.0. Ce document décrit, dans l'alinéa A.5, un procédé de soumission d'un message vocal à un terminal de télécommunication en utilisant un serveur de messagerie multimédia. Ce procédé est caractérisé en ce qu'il comprend les étapes suivantes: la réception d'un message vocal dans une boîte de réception d'un serveur de messagerie vocale, l'envoi dudit message vocal vers un serveur de messagerie multimédia en utilisant le protocole SMTP pour la transmission de messages électroniques et un dernier étape d'envoi du serveur de messagerie multimédia d'un message multimédia vers le terminal destinataire avec le message vocal adjoint.

La présente invention a pour but d'améliorer les modes de notification de message et notamment de les rendre plus conviviales.

De plus, aucun service de messagerie et aucun service de répertoire ne permet à ces abonnés de recevoir une illustration de manière concomitante à la réception d'un message vocal.

Pour palier les insuffisances des services de notification des systèmes de messagerie existants, la présente invention propose un procédé de soumission à un terminal de télécommunication appartenant à un utilisateur destinataire, d'un message déposé dans une boîte de réception d'un serveur de messagerie de l'utilisateur destinataire par un correspondant déposant, caractérisé en ce qu'il comprend les étapes successives suivantes :
- une première étape d'envoi du serveur de messagerie vocale vers un dispositif répertoire d'une requête de recherche d'une illustration associée au correspondant déposant, ladite requête comportant au moins un moyen d'identification dudit correspondant déposant,
- une seconde étape d'envoi de ladite illustration du dispositif répertoire vers le serveur de messagerie,
- une troisième étape d'envoi du message déposé et de ladite illustration du serveur de messagerie vers un serveur de messagerie multimédia,
- une quatrième étape d'envoi du serveur de messagerie multimédia vers le terminal dudit utilisateur destinataire d'un message multimédia contenant au moins ledit message déposé et ladite illustration, pour assurer leur consultation directement sur le terminal de communication de l'utilisateur destinataire.

Grâce à ce procédé, l'abonné dispose, directement sur son terminal de télécommunication, du message vocal et d'une illustration caractéristique du correspondant déposant.

Cette invention simplifie les démarches de l'utilisateur pour accéder aux messages et augmente la convivialité des services de messagerie classique. Elle permet également d'identifier le correspondant déposant de manière ludique et instantanée.

Suivant des modes particuliers de réalisation, le procédé de soumission d'un message comporte l'une ou plusieurs des caractéristiques suivantes :
- l'illustration est caractéristique du correspondant déposant et la requête de recherche d'une illustration comporte au moins un moyen d'identification du correspondant déposant ;
- le serveur de messagerie est un serveur de messagerie vocale, le message déposé comprenant des données vocales ;
- le procédé comprend, en outre une étape de recherche dans une base de données du dispositif répertoire de l'illustration à partir dudit moyen d'identification, et une étape de traitement du message déposé et de l'illustration pour les inclure dans un message multimédia par le serveur de messagerie multimédia ;
- le procédé comporte une étape préalable d'enregistrement dans la base de données du dispositif répertoire du moyen d'identification du correspondant déposant et d'une illustration associée à ce moyen d'identification ;
- l'illustration caractéristique du correspondant déposant comprend une photo ou un logo ;
- l'illustration est apte à être remplacée par une illustration spécifique en l'absence d'enregistrement d'une illustration associée au correspondant déposant dans la base de données ;
- l'illustration est apte à être remplacée par une illustration alternative lorsque le correspondant déposant a activé un mode de refus de présentation de la ligne appelante, l'illustration alternative étant caractéristique d'une communication en mode secret ;
- le message déposé comprend également des données textuelles ;
- le procédé comprend en outre une étape d'analyse du message déposé et/ou de la boîte de réception pour établir des informations relatives à ce ou à ces messages par une unité de traitement du serveur de messagerie, et la seconde étape d'envoi comprend également l'envoi des informations relatives à ce ou à ces messages ; et l'étape de traitement comprend une étape d'introduction des informations dans ledit message multimédia ;
- le procédé comporte également une étape d'enregistrement du message déposé et de l'illustration dans la boîte de réception du service de la messagerie lorsque le terminal de l'utilisateur destinataire n'est pas joignable ;
- l'illustration comprend le logo d'un opérateur ou une image publicitaire.

La présente invention propose également un système de soumission d'un message déposé dans une boîte de réception d'un serveur de messagerie d'un utilisateur destinataire équipé d'un terminal de télécommunication par un correspondant déposant, caractérisé en ce qu'il comprend au moins :
- au niveau dudit serveur de messagerie,
   - une interface de communication vers un serveur de messagerie multimédia permettant d'assurer la transmission de ce message déposé vers ledit serveur de messagerie multimédia et,
- au niveau du terminal de télécommunication de l'utilisateur destinataire,
   - une interface de communication avec ledit serveur de messagerie multimédia pour recevoir ledit message multimédia contenant ledit message déposé,
   - un module client multimédia (MMS) permettant de restituer directement ledit message déposé sur ledit terminal de télécommunication.

Suivant des modes particuliers de réalisation, le système de soumission d'un message comporte l'une ou plusieurs des caractéristiques suivantes :
- le serveur de messagerie est apte à communiquer avec un dispositif répertoire pour requérir une illustration associée au correspondant déposant, le dispositif répertoire comprenant une base de données comprenant des espaces d'enregistrement apte à stocker des illustrations et des moyens de recherche d'une illustration dans ladite base de données à partir d'un moyen d'identification envoyé par le serveur de messagerie ;
- le réseau de télécommunication est un réseau de téléphones mobiles et/ou un réseau de postes fixes ;
- l'interface de communication du serveur de messagerie est une interface de type XML et le système comporte un serveur passerelle pour convertir le protocole de communication en un protocole lisible par le serveur multimédia.

La description suivante, donnée à titre d'exemple non limitatif permet de décrire l'invention plus précisément, en référence aux figures annexées sur lesquelles :
- La figure 1 est une vue schématique d'un système de soumission d'un message déposé dans une boîte de réception d'un serveur de messagerie selon l'invention ;

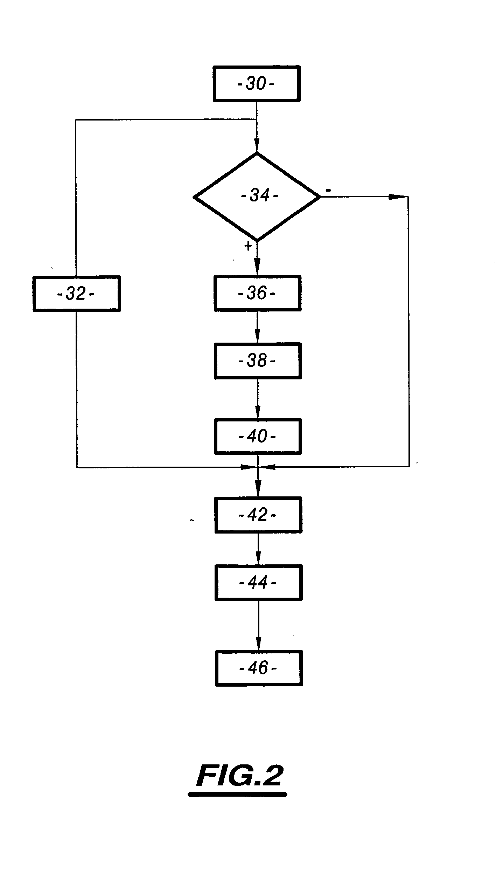

- La figure 2 est un diagramme synoptique des principales étapes du procédé de soumission d'un message selon l'invention.

Le procédé et le système de soumission d'un message selon cette invention vont être décrits ci-dessous en application sur un serveur de messagerie vocale. Cependant, ils pourraient également être appliqués à un serveur de messagerie écrite ou image. Dans ce cas, les messages pourraient être constitués par exemple par une carte météo ou un article de journal.

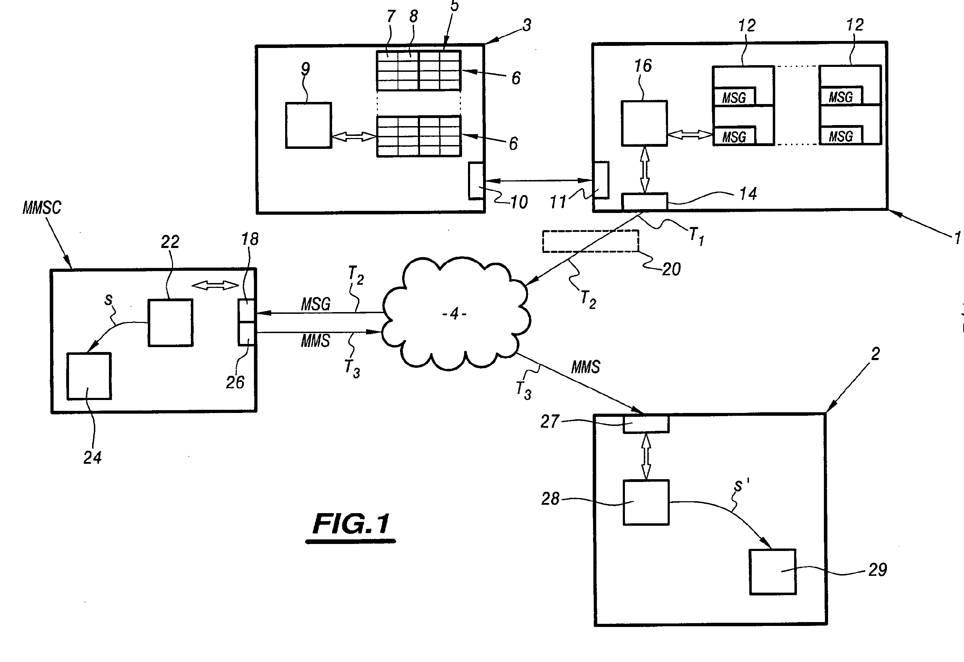

Le système de soumission d'un message, représenté sur la figure 1, comprend un serveur de messagerie vocale 1, un terminal de télécommunication 2 d'un utilisateur destinataire abonné au serveur de messagerie 1, un dispositif répertoire 3 et un serveur de messagerie multimédia MMSC. Le serveur de messagerie vocale 1, le serveur de messagerie multimédia MMSC et le terminal de communication 2 sont aptes à échanger des données par l'intermédiaire d'un réseau de télécommunication 4.

Le dispositif répertoire 3 comprend une base de donnée 5 divisée en plusieurs espaces d'enregistrement répertoire 6 chacun réservé à un utilisateur abonné. Chaque espace répertoire 6 comprend des moyens d'identification 7 de ses correspondants appelant ainsi qu'éventuellement leurs différents numéros de téléphones mobiles et fixes, adresses, codes d'immeuble etc.

Chaque espace d'enregistrement répertoire 6 comprend également des illustrations 8 représentant ou évoquant les différents correspondants appelants présents dans le carnet d'adresse de l'utilisateur destinataire. Ces illustrations sont constituées d'une photo d'un correspondant déposant ou d'un logo ou d'une image qui évoque chacun des différents correspondants déposants.

De plus, le serveur répertoire 3 comprend également une unité de traitement 9 et une interface de communication 10 pour communiquer avec le serveur de messagerie vocale 1.

Sur requête du serveur de messagerie vocale 1, le dispositif répertoire 3 est apte à rechercher dans l'espace d'enregistrement 6 de l'utilisateur destinataire une illustration 8 associée au correspondant déposant et à envoyer cette illustration 8 au serveur de messagerie vocale 1 via les interfaces de communication du serveur répertoire 10 et du serveur de messagerie 11.

Dans l'exemple illustré en figure 1, le dispositif répertoire 3 est hébergé sur un serveur indépendant et communique avec le service de messagerie vocale 1 via les interfaces de communication 10 et 11. Cependant, le dispositif répertoire 3 pourrait également être directement hébergé sur le serveur de messagerie vocale.

Le serveur de messagerie vocale 1 comprend un ensemble de boîtes de réception de messages 12, une interface de communication 14 avec le réseau de télécommunication 4, une interface de communication 11 avec le serveur répertoire 3 et une unité de traitement 16.

Chaque boîte de réception 12 est dédiée à un utilisateur destinataire abonné particulier et est identifiée par un moyen d'identification tel que par exemple le numéro de téléphone de l'utilisateur abonné.

L'unité de traitement 16 de la messagerie 1 est apte à gérer les messages déposés (MSG) dans les boîtes de réception 12 des utilisateurs destinataires.

En particulier, l'unité de traitement 16 est apte à envoyer une requête de recherche d'une illustration caractéristique du correspondant déposant au dispositif répertoire 3.

De plus, l'unité de traitement 16 est apte à envoyer les messages vocaux MSG déposés dans les boîtes de réception 12, ainsi que les illustrations 8 envoyées par le serveur répertoire 3 à un serveur de messagerie multimédia MMSC.

Par ailleurs, l'unité de traitement 16 est apte à traiter une fonction appelée « renseignement ». Cette fonction peut être activée ou désactivée sur commande de l'opérateur de la messagerie vocale 1 ou de l'utilisateur abonné par exemple par envoi d'un message MMS ou SMS.

Lorsque cette fonction est activée, l'unité de traitement 16 du serveur de messagerie 1 analyse les messages reçus (MSG) et établit des informations relatives à ces messages et/ou à la boîte de réception 12. Ces informations peuvent, par exemple, comprendre le numéro de téléphone du déposant, la date et l'heure à laquelle le message a été reçu, la taille du message reçu, le nombre de messages stockés dans la boîte de réception ou le pourcentage de mémoire non alloué dans celle-ci.

Lorsque la fonction « renseignement » est activée, l'unité de traitement 16 du serveur de messagerie vocale 1 est apte à introduire les informations textuelles concernant les messages réceptionnés, le message vocal réceptionné MSG et l'illustration 8 dans un unique message et à les envoyer au serveur de messagerie multimédia MMSC.

Pour dialoguer avec un serveur multimédia MMSC, le serveur de messagerie 1 comprend une interface de communication 14. Différents types d'interfaces peuvent être utilisés.

Ainsi, un premier exemple d'interfaçage consiste à utiliser un service de notification par e-mail déjà disponible sur certaines messageries vocales fixes ou mobiles. Dans ce cas, un message électronique e-mail est directement envoyé T1, T2 vers une interface 18 du serveur multimédia MMSC. Cet e-mail contient en pièce attachée le message vocal MSG du correspondant ainsi qu'une illustration 8 associée au correspondant déposant ayant déposé le message et, éventuellement des informations relatives au message ou à la boîte de réception. Ces services de notification par e-mail sont aptes à dialoguer avec une interface du type MM3 au niveau de la messagerie multimédia MMSC. L'interface MM3 est généralement utilisée entre un serveur de messagerie multimédia et des systèmes de messagerie externe. Elle n'est pas normalisée mais des exemples d'implémentation utilisant le protocole SMTP sont indiqués dans les normes décrites dans le document MMS 3GPP TS 23.140 : « Annexe A: Exemples d'implémentations d'architectures MMS ».

De même, un second exemple d'interfaçage consiste à utiliser une librairie XML, elle aussi, déjà disponible sur certaines messageries vocales. Comme les librairies XML communiquent selon un langage HTML et un protocole HTTP, le message vocal MSG et l'illustration 8 sont tout d'abord envoyés vers une passerelle 20 intermédiaire pour convertir le message en protocole SMTP, de sorte qu'il soit exploitable par l'interface de type MM3 de la messagerie multimédia. Puis, le message est envoyé T2 vers le serveur de messagerie multimédia MMSC. La richesse fonctionnelle de la librairie XML permet d'enrichir le service rendu avec la possibilité de gérer les messages comme par exemple, par suppression d'un message vocal directement après son transfert vers le serveur multimédia MMSC.

Un troisième exemple consiste à utiliser une interface MM7. Cette interface MM7 est classiquement utilisée entre un serveur de messagerie multimédia MMS et des fournisseurs de services à valeur ajoutée. Elle est normalisée et basée sur le protocole SOAP.

Le serveur multimédia MMSC comprend une interface de communication 18 vers le serveur de messagerie vocale 1, une unité de traitement 22 des messages, une mémoire 24 et une interface de communication 26 vers le terminal 2 de l'utilisateur destinataire.

Comme décrit précédemment, l'interface de communication 18 avec le serveur de messagerie vocale 1 est une interface de type MM3 ou MM7.

Les moyens de stockage de donnée ou mémoire 24 sont aptes à stocker temporairement les messages vocaux, les illustrations et le cas échéant des données textuelles envoyés par le serveur de messagerie 1.

L'unité de traitement 22 est apte à inclure le message vocal déposé MSG, l'illustration 8 et éventuellement les données textuelles dans un message multimédia MMS.

Le serveur de la messagerie multimédia MMSC est apte à envoyer un message multimédia MMS contenant le message vocal MSG, l'illustration 8 ainsi qu'éventuellement les données textuelles vers le terminal de télécommunication 2 de l'utilisateur destinataire abonné.

L'interface de communication 26 est une interface de type MM1 adaptée à communiquer avec un module client multimédia 28 du terminal de communication 2.

Le terminal de télécommunication 2 de l'utilisateur abonné comprend une interface de communication 27 avec le serveur de messagerie multimédia MMSC, un module client multimédia 28 et un moyen de stockage de données 29.

Préférentiellement, l'interface de communication 27 avec le serveur de messagerie multimédia MMSC est de type MM1.

Le module client multimédia 28 est d'une part un moyen de communication avec une messagerie multimédia MMSC et, d'autre part un moyen de composition, de lecture et de présentation de messages multimédias MMS.

De plus, il est apte à gérer les messages multimédias dans le terminal. Ainsi, le module client multimédia 28 permet à l'utilisateur destinataire abonné de conserver ses messages multimédias dans son terminal, de les réécouter, de les effacer ou même de les transférer vers un autre utilisateur.

Les interfaces de communication 10, 11, 14, 18, 26, 27 et les unités de traitement 9, 16, 22 du serveur de messagerie vocale 11, du serveur répertoire 3 et du serveur de messagerie multimédia ainsi que le module client multimédia 28 peuvent être implémentés en hardware sur un microcontrôleur ou en software sur un support logiciel ou un composant programmé exécuté par un microprocesseur à partir d'une mémoire non volatile.

Le moyen de stockage de données 29 est constitué par une mémoire non volatile de type ROM (Read Only Memory), EEPROM (Electrically Erasable Programmable Read Only Memory) ou équivalent. Il a une capacité qui peut être typiquement de l'ordre de 500 kilo octets, ou plus, et permet de stocker les messages multimédias.

Les différentes étapes du procédé de soumission d'un message vont, à présent être décrites.

Le procédé de soumission d'un message commence par une étape de réception 30 d'un message MSG d'un correspondant déposant dans la boîte de réception 12 de l'abonné destinataire du service de messagerie vocale.

Lorsque la fonction « renseignement » est activée, l'unité de traitement 16 du serveur de messagerie vocale 1 analyse ce message au cours d'une étape 32, et établit des informations le concernant et/ou concernant la boîte de réception 12 de l'utilisateur destinataire abonné.

Parallèlement, à l'étape 34, l'unité de traitement 16 de la messagerie vocale 1 vérifie si le message déposé MSG comprend un moyen d'identification 7 du correspondant déposant tel que par exemple son numéro de téléphone.

Lorsque le moyen d'identification 7 du correspondant déposant est inexistant, par exemple quand le correspondant interdit l'identification de sa ligne par activation d'un mode de refus de présentation du numéro de la ligne appelante, l'unité de traitement 16 recherche dans la boîte de réception 12 de la messagerie 1 une illustration spécifique caractéristique d'un mode de communication secret.

Cette illustration a été préalablement enregistrée par l'utilisateur destinataire ou par l'opérateur du service de messagerie 1.

En variante, cette illustration est enregistrée dans l'espace d'enregistrement 6 du dispositif répertoire 3.

Alternativement, si le moyen d'identification est inexistant cette illustration 8 est remplacée par un code particulier également caractéristique de l'utilisation par le correspondant déposant d'un mode secret.

Lorsque le moyen d'identification 7 du correspondant déposant est présent, l'unité de traitement 16 de la messagerie vocale 1 envoie au serveur répertoire 3 une requête de recherche d'illustration lors d'une étape 36. Cette requête comprend le moyen d'identification 7 du correspondant déposant ainsi qu'un moyen d'identification de l'utilisateur destinataire propriétaire de l'espace répertoire 6.

A la réception de cette requête, l'unité de traitement 9 du serveur répertoire 3 identifie, au cours de l'étape 38, l'espace répertoire 6 de l'utilisateur destinataire abonné à l'aide du moyen d'identification de l'utilisateur destinataire abonné et recherche l'illustration 8 associée au moyen d'identification 7 du correspondant déposant dans cette espace répertoire 6.

Ensuite, pendant l'étape 40, l'unité de traitement 9 du serveur répertoire 3 envoie l'illustration 8 associée au correspondant appelant à la messagerie vocale 1 via les interfaces de communication 10 et 11.

Cependant, si aucune illustration spécifique n'a été enregistrée pour ce correspondant, l'unité de traitement 9 du serveur répertoire 3 émet une illustration particulière indiquant à l'abonné l'absence d'illustration associée au correspondant déposant. Cette illustration particulière a été préalablement enregistrée par l'utilisateur destinataire ou par l'opérateur du service de messagerie 1.

Au cours d'une étape 42, T1, T2, le serveur de messagerie 1 transmet le message vocal déposé MSG dans la boite de réception 12, l'illustration 8 associée au correspondant déposant et, lorsque la fonction « renseignement » a été activée, des informations relatives au message MSG ou à la boîte de réception 12 au serveur de messagerie multimédia MMSC via l'interface de communication 14 et le réseau de télécommunication 4. Ainsi, les données vocales, images et éventuellement textuelles sont associées dans un unique message et envoyées au serveur de messagerie multimédia.

Au cours d'une étape 44, l'unité de traitement 22 du centre serveur de messagerie multimédia MMSC traite le message vocal déposé MSG, l'illustration 8 associée au correspondant déposant ainsi qu'éventuellement les informations relatives au message déposé ou à la boîte de réception 12 pour les introduire dans un unique message multimédia MMS.

Enfin, au cours de l'étape 46, le message multimédia MMS est envoyé au terminal de télécommunication 2 du destinataire.

Ainsi, cette invention permet à l'utilisateur destinataire de recevoir directement sur son terminal de télécommunication 2 le message vocal MSG que le correspondant déposant a déposé dans sa boîte de réception 12 de sa messagerie vocale 1 ainsi qu'une illustration 8 caractéristique du correspondant déposant.

Le message multimédia MMS est conservé temporairement S dans une mémoire 29 du serveur de messagerie multimédia MMSC. La messagerie multimédia MMSC supprime le message multimédia de sa mémoire 29 dès que celui-ci a pu être envoyé avec succès au terminal de télécommunication 2.

Par ailleurs, il est préférable que le serveur de messagerie vocale 1 n'envoie pas comme usuellement une autre notification de présence d'un message, afin d'éviter que l'utilisateur ne soit informé deux fois de la réception d'un même message vocal.

Dans un mode de réalisation préféré de l'invention, l'utilisateur abonné peut activer ou désactiver l'envoi des messages vocaux multimédias. L'accès à la gestion d'activation/de désactivation peut se faire :
- par appel vocal depuis la ligne propriétaire de la boîte vocale,
- par envoi d'un SMS ou d'un MMS depuis la ligne propriétaire de la boîte vocale,
- par un accès WEB ou WAP permettant à l'utilisateur de modifier ses options de notification,
- en utilisant deux codes USSD dédiés à l'activation/désactivation de cette notification.

Le message vocal MSG enregistré dans la boîte de réception 12 de l'utilisateur destinataire, peut être conservé sur le service de messagerie 1 après son transfert vers le centre serveur de messagerie multimédia MMSC. Dans ce cas, la consultation du message sur la messagerie vocale peut donc toujours être offerte. Ainsi, si le terminal de télécommunication 2 est non joignable, l'utilisateur abonné peut tout de même consulter le message enregistré dans la boîte de réception 12.

Avantageusement, lorsque le terminal de communication 2 de l'utilisateur reçoit le message multimédia, le module client MMS peut l'enregistrer dans sa mémoire 29 pendant une étape S'.

Alternativement, l'illustration caractéristique du correspondant déposant est remplacée par une image publicitaire tel que par exemple le logo de l'opérateur.

Ce service de soumission de messages par messagerie multimédia pourra être offert par un opérateur à tous ses abonnés disposant d'un terminal comportant un module client MMS.

Cette invention peut être appliquée à un réseau de téléphones fixes ou à un réseau de téléphones mobiles.

## Revendications

1. Procédé de soumission à un terminal de télécommunication (2) appartenant à un utilisateur destinataire, d'un message déposé (MSG) dans une boîte de réception (12) d'un serveur de messagerie (1) de l'utilisateur destinataire par un correspondant déposant, **caractérisé en ce qu'**il comprend les étapes successives suivantes :
- une première étape d'envoi (36) du serveur de messagerie vocale (1) vers un dispositif répertoire (3) d'une requête de recherche d'une illustration (8),
- une seconde étape d'envoi (40) de ladite illustration (8) du dispositif répertoire (3) vers le serveur de messagerie (1),
- une troisième étape d'envoi (42) du message déposé (MSG) et de ladite illustration (8) du serveur de messagerie (1) vers un serveur de messagerie multimédia (MMSC),
- une quatrième étape d'envoi (46) du serveur de messagerie multimédia (MMSC) vers le terminal (2) dudit utilisateur destinataire d'un message multimédia (MMS) contenant au moins ledit message déposé (MSG) et ladite illustration (8), pour assurer leur consultation directement sur le terminal de communication (2) de l'utilisateur destinataire.

2. Procédé de soumission d'un message selon la revendication 1, **caractérisé en ce que** l'illustration (8) est caractéristique du correspondant déposant et **en ce que** la requête de recherche d'une illustration comporte au moins un moyen d'identification (7) du correspondant déposant.

3. Procédé de soumission d'un message selon la revendication 1 ou 2, **caractérisé en ce que** ledit serveur de messagerie (1) est un serveur de messagerie vocale, ledit message déposé (MSG) comprenant des données vocales.

4. Procédé de soumission d'un message selon la revendication 2 ou 3, **caractérisé en ce qu'**il comprend, en outre une étape de recherche (38) dans une base de données (6) du dispositif répertoire (3) de ladite illustration (8) à partir dudit moyen d'identification (7), et une étape de traitement (44) du message déposé (MSG) et de ladite illustration (8) pour les inclure dans un message multimédia (MMS) par le serveur de messagerie multimédia (MMSC).

5. Procédé de soumission d'un message selon la revendication 4, **caractérisé en ce qu'**il comporte une étape préalable d'enregistrement dans la base de données (5) du dispositif répertoire (3) du moyen d'identification (7) du correspondant déposant et d'une illustration (8) associée à ce moyen d'identification.

6. Procédé de soumission d'un message selon l'une quelconque des revendications 2 à 5, **caractérisé en ce que** l'illustration (8) caractéristique du correspondant déposant comprend une photo ou un logo.

7. Procédé de soumission d'un message selon l'une quelconque des revendications 2 à 6, **caractérisé en ce que** ladite illustration (8) est apte à être remplacée par une illustration spécifique en l'absence d'enregistrement d'une illustration associée au correspondant déposant dans ladite base de données (5).

8. Procédé de soumission d'un message selon l'une quelconque des revendications 2 à 6, **caractérisé en ce que** ladite illustration (8) est apte à être remplacée par une illustration alternative lorsque le correspondant déposant a activé un mode de refus de présentation de la ligne appelante, ladite illustration alternative étant caractéristique d'une communication en mode secret.

9. Procédé de soumission d'un message selon l'une quelconque des revendications précédentes, **caractérisé en ce que** le message déposé (MSG) comprend également des données textuelles.

10. Procédé de soumission d'un message selon l'une quelconque des revendications 4 à 9, **caractérisé en ce qu'**il comprend en outre une étape d'analyse (32) du message déposé (MSG) et/ou de la boîte de réception (12) pour établir des informations relatives à ce ou à ces messages par une unité de traitement (16) du serveur de messagerie (1), et **en ce que** la seconde étape d'envoi comprend également l'envoi desdites informations relatives à ce ou à ces messages ; et **en ce que** l'étape de traitement (44) comprend une étape d'introduction desdites informations dans ledit message multimédia (MMS).

11. Procédé de soumission d'un message selon l'une quelconque des revendications précédentes, **caractérisé en ce qu'**il comporte également une étape d'enregistrement du message déposé (MSG) et de l'illustration dans la boîte de réception (12) du service de la messagerie (1) lorsque le terminal (2) de l'utilisateur destinataire n'est pas joignable.

12. Procédé de soumission d'un message selon l'une des revendications précédentes, **caractérisé en ce que** l'illustration comprend le logo d'un opérateur ou une image publicitaire.

13. Système de soumission d'un message déposé dans une boîte de réception (12) d'un serveur de messagerie (1) d'un utilisateur destinataire équipé d'un terminal de télécommunication (2) par un utilisateur expéditeur, **caractérisé en ce qu'**il comprend au moins :
- au niveau dudit serveur de messagerie (1),
- une interface de communication (14) vers un serveur de messagerie multimédia (MMSC) permettant d'assurer la transmission de ce message déposé (MSG) vers ledit serveur de messagerie multimédia (MMSC) et,
- au niveau du terminal de télécommunication (2) de l'utilisateur destinataire,
- une interface de communication (27) avec ledit serveur de messagerie multimédia (MMSC) pour recevoir ledit message multimédia (MMS) contenant ledit message déposé (MSG),
- un module client multimédia (28) de messages multimédias (MMS) permettant de restituer directement ledit message déposé (MSG) sur ledit terminal de télécommunication (2).

14. Système de soumission selon la revendication 13, **caractérisé en ce que** le serveur de messagerie (1) est apte à communiquer avec un dispositif répertoire (3) pour requérir une illustration (8) associée au correspondant déposant, ledit dispositif répertoire comprenant :
- une base de données (5) comprenant des espaces d'enregistrement (6) apte à stocker des illustrations,
- des moyens de recherche (9) d'une illustration (8) dans ladite base de données à partir d'un moyen d'identification (7) envoyé par le serveur de messagerie (1).

15. Système de soumission d'un message selon l'une quelconque des revendications 13 ou 14, **caractérisé en ce que** le réseau de télécommunication (2) est un réseau de téléphones mobiles et/ou un réseau de postes fixes.

16. Système de soumission d'un message selon l'une quelconque des revendications 13 à 15, **caractérisé en ce que** l'interface de communication du serveur de messagerie est une interface de type XML et **en ce que** le système comporte un serveur passerelle (20) pour convertir le protocole de communication en un protocole lisible par le serveur multimédia (MMSC).

## Claims

1. Method for submitting, to a telecommunication terminal (2) belonging to a recipient user, a message (MSG) deposited in an inbox (12) of a messaging server (1) of the recipient user by a depositing party, **characterized in that** it comprises the following successive steps:
- a first step (36) of sending from the voice messaging server (1) to a directory device (3) a search request for an illustration (8),
- a second step (40) of sending said illustration (8) from the directory device (3) to the messaging server (1),
- a third step (42) of sending the deposited message (MSG) and said illustration (8) from the messaging server (1) to a multimedia messaging server (MMSC),
- a fourth step (46) of sending from the multimedia messaging server (MMSC) to the terminal (2) of said recipient user a multimedia message (MMS) containing at least said deposited message (MSG) and said illustration (8), so as to ensure their consultation directly on the communication terminal (2) of the recipient user.

2. Method for submitting a message according to Claim 1, **characterized in that** the illustration (8) is characteristic of the depositing party and **in that** the search request for an illustration comprises at least one means of identification (7) of the depositing party.

3. Method for submitting a message according to Claim 1 or 2, **characterized in that** said messaging server (1) is a voice messaging server, said deposited message (MSG) comprising voice data.

4. Method for submitting a message according to Claim 2 or 3, **characterized in that** it comprises, furthermore, a step (38) of searching in a database (6) of the directory device (3) for said illustration (8) on the basis of said identification means (7), and a step (44) of processing the deposited message (MSG) and said illustration (8) so as to include them in a multimedia message (MMS) by the multimedia messaging server (MMSC).

5. Method for submitting a message according to Claim 4, **characterized in that** it comprises a prior step of storing in the database (5) of the directory device (3) the means of identification (7) of the depositing party and an illustration (8) associated with this identification means.

6. Method for submitting a message according to any one of Claims 2 to 5, **characterized in that** the illustration (8) characteristic of the depositing party comprises a photo or a logo.

7. Method for submitting a message according to any one of Claims 2 to 6, **characterized in that** said illustration (8) is able to be replaced with a specific illustration in the absence of a storing of an illustration associated with the depositing party in said database (5).

8. Method for submitting a message according to any one of Claims 2 to 6, **characterized in that** said illustration (8) is able to be replaced with an alternative illustration when the depositing party has activated a mode denying presentation of the calling line, said alternative illustration being characteristic of a communication in secret mode.

9. Method for submitting a message according to any one of the preceding claims, **characterized in that** the deposited message (MSG) also comprises textual data.

10. Method for submitting a message according to any one of Claims 4 to 9, **characterized in that** it furthermore comprises a step (32) of analysing the deposited message (MSG) and/or the inbox (12) so as to establish information relating to this or to these messages by a processing unit (16) of the messaging server (1), and **in that** the second sending step also comprises the sending of said information relating to this or to these messages; and **in that** the processing step (44) comprises a step of introducing said information into said multimedia message (MMS).

11. Method for submitting a message according to any one of the preceding claims, **characterized in that** it also comprises a step of storing the deposited message (MSG) and the illustration in the inbox (12) of the messaging server (1) when the terminal (2) of the recipient user is not contactable.

12. Method for submitting a message according to one of the preceding claims, **characterized in that** the illustration comprises the logo of an operator or an advertising image.

13. System for submitting a message deposited in an inbox (12) of a messaging server (1) of a recipient user equipped with a telecommunication terminal (2) by a forwarding user, **characterized in that** it comprises at least:
- at the level of said messaging server (1),
- a communication interface (14) to a multimedia messaging server (MMSC) making it possible to ensure the transmission of this deposited message (MSG) to said multimedia messaging server (MMSC) and,
- at the level of the telecommunication terminal (2) of the recipient user,
- a communication interface (27) with said multimedia messaging server (MMSC) for receiving said multimedia message (MMS) containing said deposited message (MSG),
- a multimedia client module (28) for multimedia messages (MMS) making it possible to directly retrieve said deposited message (MSG) on said telecommunication terminal (2).

14. Submitting system according to Claim 13, **characterized in that** the messaging server (1) is able to communicate with a directory device (3) so as to request an illustration (8) associated with the depositing party, said directory device comprising:
- a database (5) comprising recording spaces (6) able to store illustrations,
- means (9) for searching for an illustration (8) in said database on the basis of an identification means (7) sent by the messaging server (1).

15. System for submitting a message according to any one of Claims 13 or 14, **characterized in that** the telecommunication network (2) is a network of mobile telephones and/or a network of fixed sets.

16. System for submitting a message according to any one of Claims 13 to 15, **characterized in that** the communication interface of the messaging server is an interface of XML type and **in that** the system comprises a gateway server (20) for converting the communication protocol into a protocol readable by the multimedia server (MMSC).

## Patentansprüche

1. Verfahren der Sende-Übergabe einer in einem Posteingang (12) eines Mailservers (1) eines empfangenden Benutzers von einem hinterlegenden Teilnehmer hinterlegten Mitteilung (MSG) an ein zu dem empfangenden Benutzer gehörendes Telekommunikations-Endgerät (2), **dadurch gekennzeichnet, dass** es die folgenden aufeinanderfolgenden Schritte aufweist:
- einen ersten Schritt des Sendens (36) einer Suchanfrage nach einer Abbildung (8) vom Voice-Mail-Server (1) an eine Verzeichnisvorrichtung (3),
- einen zweiten Schritt des Sendens (40) der Abbildung (8) von der Verzeichnisvorrichtung (3) zum Mailserver (1),
- einen dritten Schritt des Sendens (42) der hinterlegten Mitteilung (MSG) und der Abbildung (8) vom Mailserver (1) an einen Multimedia-Mailserver (MMSC),
- einen vierten Schritt des Sendens (46) einer mindestens die hinterlegte Mitteilung (MSG) und die Abbildung (8) enthaltenden Multimedia-Mitteilung (MMS) vom Multimedia-Mailserver (MMSC) an das Endgerät (2) des empfangenden Benutzers, um ihre Abfrage direkt im Kommunikations-Endgerät (2) des empfangenden Benutzers zu gewährleisten.

2. Verfahren zur Sende-Übergabe einer Mitteilung nach Anspruch 1, **dadurch gekennzeichnet, dass** die Abbildung (8) für den hinterlegenden Teilnehmer charakteristisch ist und dass die Suchanfrage einer Abbildung mindestens ein Identifikationsmittel (7) des hinterlegenden Teilnehmers enthält.

3. Verfahren zur Sende-Übergabe einer Mitteilung nach Anspruch 1 oder 2, **dadurch gekennzeichnet, dass** der Mailserver (1) ein Voice-Mail-Server ist, wobei die hinterlegte Mitteilung (MSG) Sprachdaten enthält.

4. Verfahren zur Sende-Übergabe einer Mitteilung nach Anspruch 2 oder 3, **dadurch gekennzeichnet, dass** es außerdem einen Schritt der Suche (38) nach der Abbildung (8) ausgehend vom Identifikationsmittel (7) in einer Datenbank (6) der Verzeichnisvorrichtung (3) und einen Schritt (44) der Verarbeitung der hinterlegten Mitteilung (MSG) und der Abbildung (8) aufweist, um sie in eine Multimedia-Mitteilung (MMS) durch den Multimedia-Mailserver (MMSC) einzufügen.

5. Verfahren zur Sende-Übergabe einer Mitteilung nach Anspruch 4, **dadurch gekennzeichnet, dass** es einen vorhergehenden Schritt des Aufzeichnens des Identifikationsmittels (7) des hinterlegenden Teilnehmers und einer diesem Identifikationsmittel zugeordneten Abbildung (8) in der Datenbank (5) der Verzeichnisvorrichtung (3) aufweist.

6. Verfahren zur Sende-Übergabe einer Mitteilung nach einem der Ansprüche 2 bis 5, **dadurch gekennzeichnet, dass** die für den hinterlegenden Teilnehmer charakteristische Abbildung (8) ein Foto oder ein Logo enthält.

7. Verfahren zur Sende-Übergabe einer Mitteilung nach einem der Ansprüche 2 bis 6, **dadurch gekennzeichnet, dass** die Abbildung (8) in Abwesenheit einer Aufzeichnung einer dem hinterlegenden Teilnehmer zugeordneten Abbildung in der Datenbank (5) durch eine spezifische Abbildung ersetzt werden kann.

8. Verfahren zur Sende-Übergabe einer Mitteilung nach einem der Ansprüche 2 bis 6, **dadurch gekennzeichnet, dass** die Abbildung (8) durch ein alternative Abbildung ersetzt werden kann, wenn der hinterlegende Teilnehmer einen Modus der Verhinderung der Anzeige der anrufenden Leitung aktiviert hat, wobei die alternative Abbildung für eine Kommunikation im geheimen Modus charakteristisch ist.

9. Verfahren zur Sende-Übergabe einer Mitteilung nach einem der vorhergehenden Ansprüche, **dadurch gekennzeichnet, dass** die hinterlegte Mitteilung (MSG) ebenfalls Textdaten enthält.

10. Verfahren zur Sende-Übergabe einer Mitteilung nach einem der Ansprüche 4 bis 9, **dadurch gekennzeichnet, dass** es außerdem einen Schritt der Analyse (32) der hinterlegten Mitteilung (MSG) und/oder des Posteingangs (12) aufweist, um Informationen bezüglich dieser Mitteilung oder dieser Mitteilungen durch eine Verarbeitungseinheit (16) des Mailservers (1) zu erstellen, und dass der zweite Sendeschritt ebenfalls das Senden der Informationen bezüglich dieser Mitteilung oder dieser Mitteilungen enthält; und dass der Verarbeitungsschritt (44) einen Schritt des Einfügens der Informationen in die Multimedia-Mitteilung (MMS) enthält.

11. Verfahren zur Sende-Übergabe einer Mitteilung nach einem der vorhergehenden Ansprüche, **dadurch gekennzeichnet, dass** es ebenfalls einen Schritt der Aufzeichnung der hinterlegten Mitteilung (MSG) und der Abbildung im Posteingang (12) des Mailservers (1) aufweist, wenn das Endgerät (2) des empfangenden Benutzers nicht erreichbar ist.

12. Verfahren zur Sende-Übergabe einer Mitteilung nach einem der vorhergehenden Ansprüche, **dadurch gekennzeichnet, dass** die Abbildung das Logo eines Betreibers oder ein Werbebild enthält.

13. System zur Sende-Übergabe einer von einem sendenden Benutzer in einem Posteingang (12) eines Mailservers (1) eines empfangenden Benutzers, der mit einem Telekommunikations-Endgerät (2) ausgestattet ist, hinterlegten Mitteilung, **dadurch gekennzeichnet, dass** es mindestens aufweist:
- auf der Ebene des Mailservers (1),
- eine Kommunikationsschnittstelle (14) zu einem Multimedia-Mailserver (MMSC), die es erlaubt, die Übertragung dieser hinterlegten Mitteilung (MSG) zum Multimedia-Mailserver (MMSC) zu gewährleisten, und
- auf der Ebene des Telekommunikations-Endgeräts (2) des empfangenden Benutzers,
- eine Kommunikationsschnittstelle (27) mit dem Multimedia-Mailserver (MMSC), um die Multimedia-Mitteilung (MMS) zu empfangen, die die hinterlegte Mitteilung (MSG) enthält,
- ein Multimedia-Kundenmodul (28) von Multimedia-Mitteilungen (MMS), das es ermöglicht, die hinterlegte Mitteilung (MSG) direkt in dem Telekommunikations-Endgerät (2) wiederzugeben.

14. Sende-Übergabe-System nach Anspruch 13, **dadurch gekennzeichnet, dass** der Mailserver (1) fähig ist, mit einer Verzeichnisvorrichtung (3) zu kommunizieren, um eine Abbildung (8) anzufordern, die dem hinterlegenden Teilnehmer zugeordnet ist, wobei die Verzeichnisvorrichtung aufweist:
- eine Datenbank (5), die Aufzeichnungsräume (6) aufweist, die Abbildungen speichern können,
- Mittel (9) zur Suche nach einer Abbildung (8) in der Datenbank ausgehend von einem Identifikationsmittel (7), das vom Mailserver (1) gesendet wird.

15. Sende-Übergabe-System einer Mitteilung nach einem der Ansprüche 13 oder 14, **dadurch gekennzeichnet, dass** das Telekommunikationsnetz (2) ein Mobiltelefonnetz und/oder ein Festnetz ist.

16. Sende-Übergabe-System einer Mitteilung nach einem der Ansprüche 13 bis 15, **dadurch gekennzeichnet, dass** die Kommunikationsschnittstelle des Mailservers eine Schnittstelle vom Typ XML ist und dass das System einen Gateway-Server (20) aufweist, um das Kommunikationsprotokoll in ein für den Multimedia-Server (MMSC) lesbares Protokoll umzuwandeln.
